# EUROPÄISCHE PATENTSCHRIFT

(11) **EP 0 579 964 B1**
(45) Veröffentlichungstag und Bekanntmachung des Hinweises auf die Patenterteilung: **24.02.1999**
(21) Anmeldenummer: 93109903.0
(22) Anmeldetag: 22.06.1993
(51) Int. Cl.: B23Q 11/00

(54) **Handsäge mit Absaugvorrichtung**
Portable saw with suction device
Scie portative munie d'un dispositif d'aspiration

(30) Priorität: 22.07.1992 DE 4224094
(43) Veröffentlichungstag der Anmeldung: 26.01.1994
(73) Patentinhaber: ROBERT BOSCH GMBH, 70442 Stuttgart (DE)
(72) Erfinder: Blöchle, Hans, CH-6370 Stans (CH); Kaiser, Hans, CH-3297 Leuzigen (CH); Zeller, Christoph, CH-4552 Derendingen (CH)

(56) Entgegenhaltungen:
- EP-A- 0 347 631
- WO-A-91/11297
- DE-C- 644 011
- DE-C- 694 801
- US-A- 4 209 069

## Beschreibung

### Stand der Technik

Die Erfindung geht aus von einer Handsäge nach dem Oberbegriff des Anspruchs 1. Aus der DE 37 17 585 A1 ist eine ähnliche motorbetriebene Handsäge bekannt, die einen am Sägeblatt ansetzenden Absaugkanal aufweist, in den vom Antriebsmotor der Säge erzeugte Blasluft eingeleitet wird. Diese Blasluft reicht jedoch zur Spanabfuhr nicht aus, sondern wirkt nur unterstützend. Ein zusätzliches, von außen anzuschließendes Sauggebläse mit beim Arbeiten hinderlichem Schlauch ist erforderlich.

Durch die US 4 209 069 ist eine Handbohrmaschine bekannt, die eine als Fremdaggregat augestaltete Absaugvorrichtung zum Abtransport von Bohrspänen mit einer gesonderten Pumpe trägt, die entweder auf einer Ejektorwirkung der Antriebsdruckluft beruht oder als gesonderte, an eine elektromotorgetriebene Variante angesetzte mit dem Motor gekoppelte Drehkolbenpumpe auagestaltet ist. Diese Pumpen funktionieren zufriedenstellend, sind jedoch aufwendig herzustellen, erfordern erhebliche Konstruktionsänderungen der Handbohrmaschinen und vergrößern deren Eigengewicht und Bauvolumen.

### Vorteile der Erfindung

Die erfindungsgemäße Handsäge mit den Merkmalen des Anspruchs 1 hat demgegenüber den Vorteil, daß durch die Absaugung der Sägespäne ausschließlich aus eigener Kraft ohne Fremdaggregate die Handlichkeit der Säge erheblich verbessert wird.

Die Bauweise hat den weiteren Vorteil, daß die Späne nicht durch das Lüfterrad hindurchgezogen werden. Damit wird ein Blockieren des Lüfterrades durch Einklemmen grober Späne vermieden.

Gegenüber einer denkbaren Lösung mit zwei Lüfterrädern auf einer Welle, d. h. eines für die Kühlung und eines für die Staubabsaugung hat die erfindungsgemäße Säge den weiteren Vorteil, daß die Motorwelle nicht verlängert zu werden braucht. Dies ergibt wegen der geringeren Durchbiegung ausreichend hohe kritische Drehzahlen, ohne daß eine leistungsmindernde Absenkung der Leerlaufdrehzahl erforderlich wird.

Durch die in den abhängigen Ansprüchen aufgeführten Maßnahmen sind vorteilhafte Weiterbildungen und Verbesserungen der im Anspruch 1 angegebenen Handwerkzeugmaschine möglich. Die Bauweise nach Anspruch 2 hat den Vorteil, daß zur Erzeugung der Saugluft der vom Kühlgebläse erzeugte Luftstrom ausgenutzt wird. Die Ausführung nach Anspruch 1 ist wegen der getrennten Luftwege im Betrieb robust. Besonders vorteilhaft ist es, daß der Spansammelbehälter zum Entleeren vollständig abnehmbar ist.

### Zeichnung

Ein Ausführungsbeispiel der Erfindung ist in der Zeichnung dargestellt und in der nachfolgenden Beschreibung näher erläutert. Figur 1 zeigt einen Teillängsschnitt eines Beispiels, das nicht unter den Schutzbereich des Anspruchs 1 föllt. Figur 2 zeigt eine Ansicht und Figur 3 einen Teil-Querschnitt eines Ausführungsbeispiels der Erfindung.

### Beschreibung der Ausführungsbeispiele

Eine als Stichsäge ausgebildete Handsäge weist ein vorzugsweise zweischaliges Motorgehäuse 1 mit einem Handgriff 2 auf. Der Handgriff 2 kann einstückig an die Gehäuseschalen angespritzt sein. In dem Motorgehäuse 1 ist unter anderem ein Motor 3 untergebracht, dessen Rotor 4 eine Motorwelle 5 mit Abtriebsritzel 6 und Kollektor 7 aufweist. Das Abtriebsritzel 6 steht mit einem an sich bekannten, in der Zeichnung weggelassenen Getriebe zur Erzeugung der Hubbewegung des Werkzeugs in Eingriff. Auf der Motorwelle 5 sitzt nahe dem Ritzel 6 ein Lüfterrad 8, das zusammen mit einem geeigneten Lüftergehäuse 9 einen Lüfter 10 bildet.

Der Motor treibt über das nicht gezeigte Getriebe ein Sägeblatt 12 an. Dieses durchgreift einen Schlitz einer mit dem Gehäuse 1 verbundenen Fußplatte 13, die auf ein Werkstück aufsetzbar ist. Das Sägeblatt 12 ist oberhalb der Fußplatte 13 von einer durchsichtigen Abdeckhaube 14 umgeben. In dem Raum zwischen Motorgehäuse 1 und Fußplatte 13 ist mittig auf der Fußplatte 13 ein direkt hinter dem Sägeblatt 12 ansetzender Absaugkanal 15 ausgebildet. Dieser kann jedoch auch in dem unteren Teil des Motorgehäuses 1 angeordnet sein. Der Absaugkanal 15 - er kann mehrteilig teleskopartig ausgebildet sein - verläuft in Sägerichtung der Stichsäge parallel zur Motorwelle 5 nach hinten, knickt nach oben ab und ragt mit seiner Mündung 16 in einen Spansammelbehälter 18. Die abgesaugten Späne 19 sammeln sich am Boden 20 des Spansammelbehälters 18 an.

Der Spansammelbehälter 18 schließt luftdicht an das Motorgehäuse 1 an. Dazu ist eine umlaufende Dichtung 21 vorgesehen. Er ist beispielsweise mittels nicht dargestellter Schnappverschlüsse mit dem Motorgehäuse 1 abnehmbar so verbunden, daß die dort vorgesehenen Luftansaugöffnungen 22 vollständig abgedeckt sind. Zwischen dem Motorgehäuse 1 und dem Spansammelbehälter 18 befindet sich, insbesondere die Luftansaugöffnungen 22 überdeckend, ein luftdurchlässiges, aber Staub abhaltendes Filter 23, beispielsweise aus Baumwolle. Die Luftansaugöffnungen 22 münden in ein den Motor 3 umgebendes Kühlluftgehäuse 24. Dieses kann einstückig an das Motorgehäuse 1 angespritzt oder aber in dieses eingesetzt sein. In jedem Fall ist es gegenüber anderen Gehäuseteilen, wie insbesondere gegenüber dem Handgriff 2 abgedichtet, zum Beispiel mit einer Dichtung 26. Das Kühlluftgehäuse 24 setzt sich bis zum Lüfter 10 fort und mündet saugseitig in das Lüftergehäuse 9. Zum Austritt der angesaugten Luft weist das Motorgehäuse 1 an der Abluftseite des Lüfters 10 nicht dargestellte Austrittsöffnungen auf.

Der Lüfter 10 dient gleichzeitig der Motorkühlung und der Staubabsaugung. Dazu ist er gegenüber reinen Kühllüftern ggf. verstärkt durch ein strömungsoptimiertes Lüftergehäuse 9 gemäß DE-A-40 03 029 oder durch etwas vergrößerte Lüfterschaufeln. Dadurch wird jedoch die Länge der Motorwelle 5 nicht oder nur um wenige Millimeter verlängert. Die beim Sägen entstehenden Späne 19 werden durch den Absaugkanal 15 gesaugt und fallen nach Verlassen in den Spansammelbehälter 18, ohne die Mündung 16 zu verlegen. Die starke Umlenkung des Luftstromes nach Verlassen der Mündung 16 zu den Luftansaugöffnungen 22 unterstütz das Ausfallen der Späne. Im Spansammelbehälter 18 werden sie von dem Filter 23 zurückgehalten, während die Luft gereinigt als Kühlluft durch die Luftansaugöffnungen 22 in das Kühlluftgehäuse 24 eingesaugt wird. Die Späne 19 werden also nicht durch den Lüfter 10 gesaugt, wo insbesondere lange, beim Sägen von Weichholz in Faserrichtung entstehende Späne sich sonst zwischen Lüfterschaufeln und Lüftergehäuse einklemmen könnten. Auch die elektrischen Teile des Motors 3, wie der Kollektor 7, sind vor Sägespänen und -mehl geschützt. Zum Entleeren wird der Spansammelbehälter 18 vom Motorgehäuse 1 abgenommen. Die Kühlung des Motors 3 wird auch beim Arbeiten ohne Spanabsaugung, d.h. bei abgezogenem Spansammelbehälter 18 aufrechterhalten. In diesem Fall ist der mindestens zweiteilige Absaugkanal (15) teleskopartig in Richtung auf das Sägeblatt (12) einschiebbar.

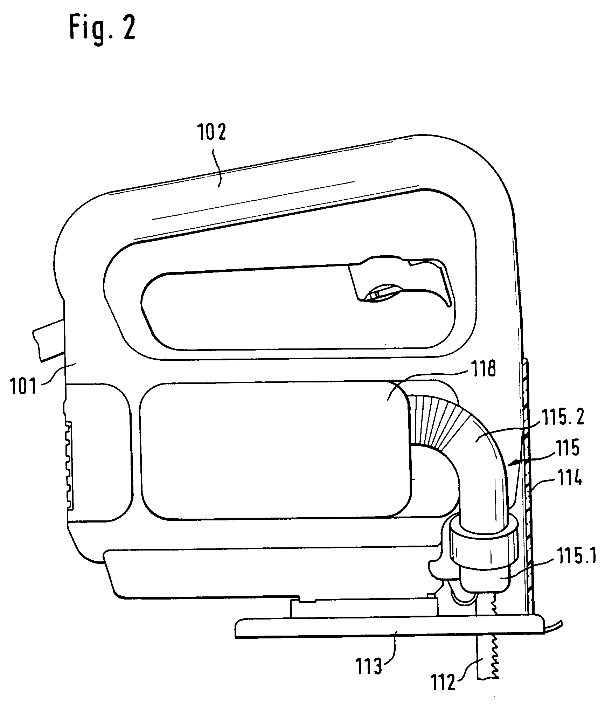

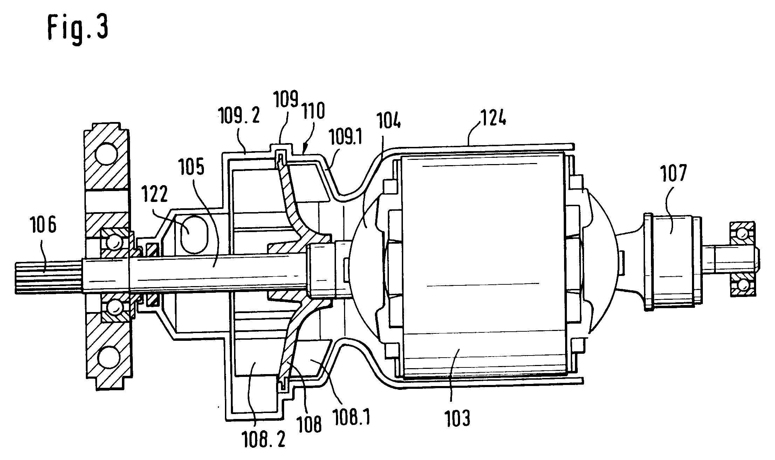

Im Ausführungsbeispiel der Erfindung nach den Figuren 2 und 3 sind für gleiche Teile gegenüber dem ersten Ausführungsbeispiel um 100 erhöhte Bezugszahlen verwendet. Die Unterschiede liegen nur in der Anordnung der Absaugeinrichtung an der Säge und in einem modifizierten Lüfterrad. Ein Motorgehäuse 101 weist einen Handgriff 102. Im Inneren des Motorgehäuse 101 befindet sich ein in Figur 2 gezeigter Motor 103 mit Rotor 104, Motorwelle 105, Abtriebsritzel 106 und Kollektor 107. Auf der Motorwelle 105 sitzt ein Lüfterrad 108 mit doppelseitiger Beschaufelung 108.1 und 108.2. Ein das Lüfterrad umgebendes funktional zweiteiligen Lüftergehäuse 109, das aus einem Kühllüftergehäuse 109.1 und einem Staublüftergehäuse 109.2 besteht, vervollständigt den Lüfter 110.

Aus Figur 2 ist weiter ein vom Motor 103 angetriebenes Sägeblatt 112, eine Fußplatte 113 und eine durchsichtige Abdeckhaube 114 erkennbar. Ein Absaugkanal 115 besteht aus einem seitlich des Sägeblatts mündenden Ansaugstutzen 115.1 und einem flexiblen kurzen Schlauch 115.2, der in einen Spannsammelbehälter 118 hineinragt. Der Spansammelbehälter 118 ist seitlich am Motorgehäuse 101 angeordnet und zur Entleerung abnehmbar. Er steht über eine Ansaugöffnung 122 mit dem Staublüftergehäuse 109.2 in Verbindung. Die Kühlluft strömt durch Öffnungen 125 im Motorgehäuse 101 in ein Kühlluftgehäuse 124, das einstückig mit dem Kühllüftergehäuse 109.1 ist.

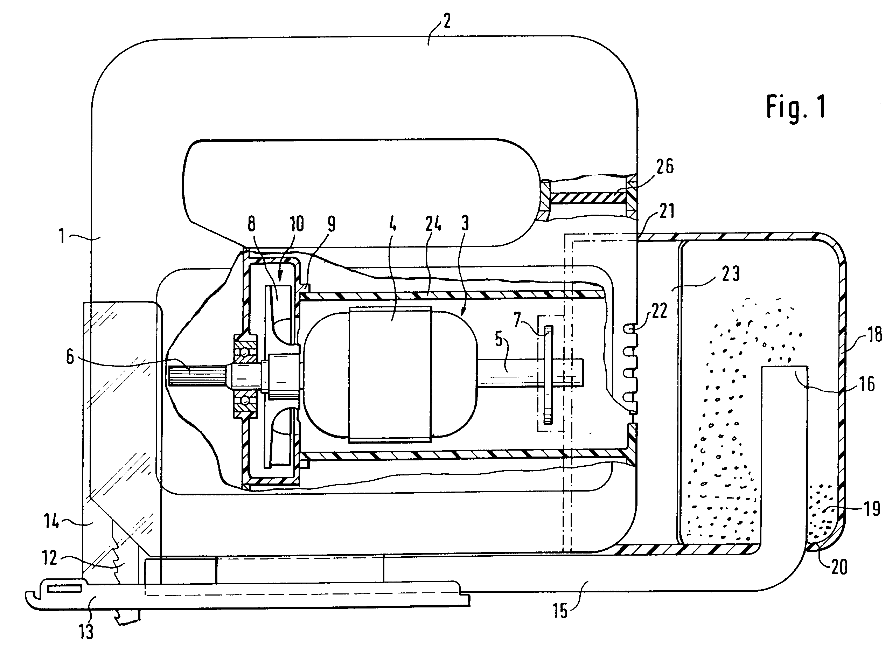

Die Funktion des Ausführungsbeipiels der Erfindung unterscheidet sich dadurch vom Bespiel nach Figur 1, daß die Luftwege für die Kühlluft und die Spanabsaugung bis zum Lüfter 110 getrennt sind. Auch innerhalb des Lüfters dient das zweiteilige Lüfterrad 108 mit seiner doppelten Beschaufelung der Trennung der Luftströme. Hier könnte gegebenenfalls aber auch ein einfaches Lüfterrad Verwendung finden, wobei die Saugluftströme im Lüftergehäuse vereinigt werden. Der Absaugkanal 115 ist relativ kurz, was die Strömungsverluste gering hält.

## Patentansprüche

1. Handsâge, insbesondere Stichsäge, mit einem Motorgehäuse (1, 101), in dem ein Motor (3, 103) mit Lüfter (10, 110) untergebracht ist, einer Fußplatte (13, 113), einem über diese hinaugragenden Sägeblatt (12, 112) und einem am Sägeblatt (12, 112) ansetzenden Absaugkanal (15, 115), dadurch gekennzeichnet,
daß der Absaugkanal (15, 115) unmittelbar in einen Spansammelbehälter (18, 118) mündet und der Lüfter (10, 110) im Saugluftstrom dem Spansammelbehälter (18, 118) nachgeschaltet ist, wobei der Motor (3, 102) von einem gegebenenfalls einstückig mit dem Motorgehäuses (1, 101) ausgebildeten Kühlluftgehäuse (24, 124) umgeben ist, das gegenüber anderen Gehäuseteilen, insbesondere dem Bereich eines Handgriffs (2, 102), luftdicht abgedichtet ist und daß vor dem Lüfter (10, 110) die Kühlluftwege von den Saugluftwegen getrennt sind und der Spansammelbehälter (18, 118) seitlich des Motorgehäuses (1, 101) angebracht ist.

2. Handsäge nach Anspruch 1, dadurch gekennzeichnet, daß der Saugluftstrom im Spansammelbehälter (18) stark, insbesondere um mindestens etwa 90° umgelenkt wird.

3. Handsäge nach einem der vorhergehenden Ansprüche, dadurch gekennzeichnet, daß der Absaugkanal (15) in dem Raum zwischen Fußplatte (13) und Motorgehäuse (1) angeordnet ist.

4. Handsäge nach einem der vorhergehenden Ansprüche, dadurch gekennzeichnet, daß der Spansammelbehälter (18) abnehmbar ist.

5. Handsäge nach einem der vorhergehenden Ansprüche, dadurch gekennzeichnet, daß die Mündung (16) des Absaugkanals (15) innerhalb des Spansammelbehälters (18) soweit oberhalb des Bodens (20) angeordnet ist, daß bereits gesammelte Späne (19) die Mündung (16) nicht verlegen.

## Claims

1. Hand saw, in particular compass saw, having a motor casing (1, 101), in which a motor (3, 103) with fan (10, 110) is accommodated, a solo plate (13, 113), a saw blade (12, 112) which projects beyond the latter and a suction duct (15, 115) which adjoins the saw blade (12, 122), characterized in that the suction duct bracket (15, 115) opens directly into a chip-collection container (18, 118) and the fan (10, 110) is connected downstream of the chip-collection container (18, 118) in the suction-air stream, the motor (3, 103) being surrounded by a cooling-air casing (24, 124), which if appropriate is formed integrally with the motor casing (1, 101) and is sealed in an airtight manner with respect to other casing parts, in particular the area of a handle (2, 102), and in that the cooling-air paths are separate from the suction-air paths ahead of the fan (10, 110), and the chip-collection container (18, 118) is attached to the side of the motor casing (1, 101).

2. Hand saw according to Claim 1, characterized in that the suction-air stream is diverted considerably, in particular through at least about 90°, in the chip-collection container (18).

3. Hand saw according to one of the preceding claims, characterized in that the suction duct (15) is arranged in the space between sole plate (13) and motor casing (1).

4. Hand saw according to one of the preceding claims, characterized in that the chip-collection container (18) is removable.

5. Hand saw according to one of the preceding claims, characterized in that the mouth (16) of the suction duct (15) is arranged inside the chip-collection container (18), sufficiently far above the base (20) for chips (19) which have already accumulated not to block the mouth (16).

## Revendications

1. Scie à main, en particulier scie à guichet, comportant un boîtier de moteur (1, 101) contenant un moteur (3, 103) équipé d'un ventilateur (10, 110), une semelle (13, 113) qu'une lame de scie (12, 112) traverse ainsi qu'un canal d'aspiration (15, 115) monté le long de cette lame,
caractérisée en ce que
le canal d'aspiration (15, 115) débouche directement dans un récipient collecteur de copeaux (18, 118) et le ventilateur (10, 110) est monté dans le courant d'air aspiré, en aval du récipient collecteur (18, 118), le moteur (3, 103) étant entouré par un boîtier d'air frais (24, 124) formant éventuellement une seule pièce avec le boîtier du moteur (1, 101), le boîtier d'air frais (2, 102) étant étanche à l'air par rapport aux autres parties du boîtier, en particulier la zone d'une poignée (2, 102) tandis qu'en amont du ventilateur (10, 110) les parcours de l'air frais sont distincts de ceux de l'air aspiré et que le récipient collecteur (18, 118) est monté sur le côté du boîtier de moteur (1, 101).

2. Scie à main selon la revendication 1,
caractérisée en ce que
le courant d'air aspiré est fortement dévié dans le récipient collecteur (18) en particulier d'au moins 90° environ.

3. Scie à main selon une des revendications précédentes,
caractérisée en ce que
le canal d'aspiration (15) est monté dans l'espace existant entre la semelle (13) et le boîtier de moteur (1).

4. Scie à main selon une des revendications précédentes,
caractérisée en ce que
le récipient collecteur de copeaux (18) peut être retiré.

5. Scie à main selon l'une des revendications précédentes,
caractérisée en ce que
l'embouchure (16) du canal d'aspiration (15) est montée à l'intérieur du récipient collecteur de copeaux (18) suffisamment au-dessus du fond (20) pour que les copeaux (19) déjà déposés ne barrent pas l'embouchure (16).
